# EUROPÄISCHE PATENTANMELDUNG

(11) **EP 1 936 207 A2**
(43) Veröffentlichungstag der Anmeldung: **25.06.2008**
(21) Anmeldenummer: 07022161.9
(22) Anmeldetag: 15.11.2007
(51) Int. Cl.: F15B 1/24, B60K 6/12, B60T 1/10

(54) **Kolbenspeicher für Fahrzeuge**

(30) Priorität: 19.12.2006 DE 102006060078
(71) Anmelder: Robert Bosch GmbH, 70184 Stuttgart (DE)
(72) Erfinder: Kane, Brian, 97816 Lohr am Main (DE)
(74) Vertreter: Thürer, Andreas

(57) **Zusammenfassung**

Offenbart wird ein Hydrospeicher mit einem Speichergehäuse und einem Trennelement, der den durch das Speichergehäuse bereitgestellten Hohlraum in zwei Räume trennt, wobei als Speichergehäuse ein Strukturelement eines des Hydrospeichers umfassenden Mobilhydrauliksystems verwendet wird.

## Beschreibung

Vorliegende Erfindung betrifft einen Hydrospeicher für ein Mobilhydrauliksystem und insbesondere einen Kolbenspeicher für ein Fahrzeug.

Hydrospeicher werden in der Mobilhydraulik vor allem dazu verwendet, eine große Menge Energie zu speichern, die entweder im antriebslosen Zustand als Backup-Energie zur Verfügung steht oder einen Antrieb unterstützt, so dass Energieeinsparungen möglich sind.

Insbesondere bei den sogenannten Hydraulikhybridfahrzeugen werden Hydrospeicher dazu verwendet, Energie, die beispielsweise beim Abbremsen der Räder erzeugt wird, zu speichern und dazu zu verwenden, das Antriebssystem des Fahrzeugs beispielsweise beim Beschleunigen zu unterstützen. Solche Hydraulikhybridsysteme kommen insbesondere bei Bussen und Lastwagen zum Einsatz.

Die zum Einsatz kommenden Hydrospeicher bestehen aus einem vorzugsweise zylindrisch geformten Gehäuse, das ein Trennelement aufweist, das das Gehäuse in zwei Räume trennt, wobei der eine Raum ein komprimierbares Fluid, der andere Raum ein nicht komprimierbares Fluid aufweist. Der das komprimierbare Fluid aufnehmende Raum ist auf der einen Seite durch das Trennelement, auf der anderen Seite durch einen Deckel, der auch integral mit dem Speichergehäuse ausgebildet sein kann, dichtend abgeschlossen. Der das nicht komprimierbare Fluid enthaltende Raum steht mit einem geeigneten Ventilsystem in Verbindung, über das das nicht komprimierbare Fluid in den Raum ein- bzw. aus dem Raum abfließen kann.

Wird das Fluid in den Raum eingeleitet, bewegt sich das Trennelement unter dem auf es wirkenden Druck derart, dass der das komprimierbare Fluid enthaltende Raum verkleinert wird, was eine Kompression des darin enthaltenden Fluids nach sich zieht. Dadurch kann Energie in Form des komprimierten Fluids gespeichert werden, die bei Bedarf über das Ablassen des nicht komprimierbaren Fluids wieder dem Hydrauliksystem zur Verfügung steht.

Nachteilig ist jedoch, dass diese Hydrospeicher Zusatzkomponenten darstellen, die ein Mehrgewicht erzeugen und zusätzliche Kosten verursachen. Des Weiteren ist der Platzbedarf solcher Hydrospeicher sehr groß, der insbesondere bei kleinen Fahrzeugen nicht vorhanden ist. Zudem wird aufgrund des durch die Hydrospeicher erhöhten Gewichts des Fahrzeugs dessen Energiebilanz verschlechtert.

Aufgabe vorliegender Erfindung ist es deshalb, einen Hydrospeicher bereitzustellen, der einen geringen Platzbedarf hat und sich nicht verschlechternd auf die Energiebilanz des Mobilhydrauliksystems auswirkt.

Diese Aufgabe wird gelöst durch einen Hydrospeicher gemäß Patentanspruch 1.

Kern der Erfindung ist es, einen Hydrospeicher bereitzustellen, der als Speichergehäuse ein Strukturelement eines Mobilhydrauliksystems verwendet oder sich in einem Strukturbauteil befindet.

Dazu kann, beispielsweise bei einem Fahrzeug, der Fahrzeugrahmen derart modifiziert werden, dass er als Speichergehäuse für den Hydrospeicher dienen kann.

Dabei ist es besonders vorteilhaft, einen Längsträger eines solchen Fahrzeugrahmens zu verwenden, da dieser ein großes Volumen und damit eine große Speicherkapazität aufweist.

Vorteilhafterweise ist, wie ein besonders bevorzugtes Ausführungsbeispiel zeigt, der Hydrospeicher als Kolbenspeicher ausgebildet. Es sind jedoch auch Ausführungsbeispiele vorteilhaft, bei denen ein Membran- oder Blasenspeichergehäuse integral mit einem Strukturelement ausgebildet ist oder in dem Strukturelement untergebracht ist.

Weitere Vorteile und bevorzugte Ausführungsbeispiele sind in den Unteransprüchen, in der Zeichnung und der Beschreibung definiert.

Im Folgenden soll die Erfindung anhand einer Zeichnung weiter erläutert werden.

Die einzige Figur zeigt ein besonders bevorzugtes Ausführungsbeispiel eines erfindungsgemäßen Hydrospeichers.

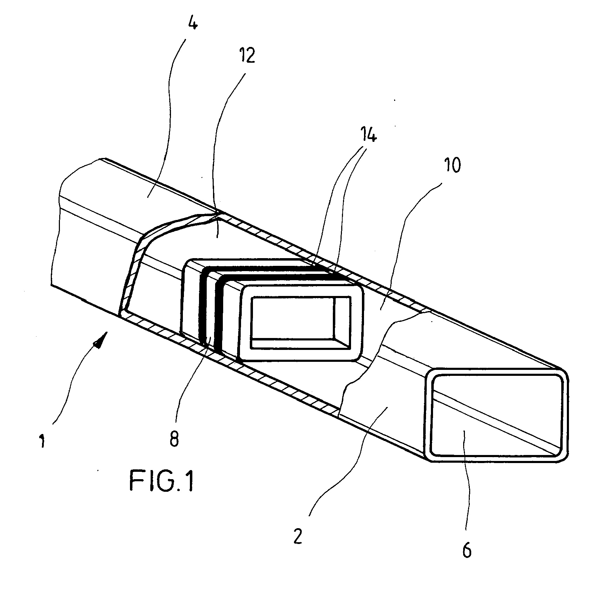

Figur 1 zeigt einen als Kolbenspeicher ausgebildeten Hydrospeicher 1, wobei als Speichergehäuse 2 ein Fahrzeugrahmenelement, vorzugsweise ein Längsträger 4, dient.

Herkömmliche Fahrzeugrahmen bestehen meistens aus zwei voneinander beabstandeten über Querträger miteinander verbundenen Rahmenlängsträgern. An dem Fahrzeugrahmen sind weitere Fahrzeugelemente, wie beispielsweise Vorder-und Hinterradachsaufhängung, Antriebsmaschine und/oder Getriebe angeordnet. Zudem sind Fahrzeugrahmen bekannt, an denen weitere bereits vormontierte Module angebracht werden können. Es ist deshalb auch möglich, den erfindungsgemäßen Hydrospeicher integral mit einem Rahmenmodul auszubilden, das erst bei der Endmontage mit dem Fahrzeughauptrahmen verbunden wird. Vorzugsweise wird als Speichergehäuse ein Längsträger des Fahrzeugrahmens verwendet, der ein rechteckiges oder rundes Profil mit Hohlraum aufweist.

Figur 1 zeigt einen Aufriss eines solchen Längsträgers 4 mit rechteckigem Profil, der als Speichergehäuse 2 für den Hydrospeicher 1 verwendet wird. Dazu ist in dem Hohlraum 6 des Längsträgers 4 ein als Trennelement dienender Kolben 8 angeordnet, der den Hohlraum 6 des Längsträgers 4 in zwei Räume 10, 12 trennt.

Der Raum 10 beinhaltet ein komprimierbares Fluid, insbesondere Luft, oder Stickstoff und ist gegenüber der Umgebung dicht abgeschlossen. Dazu kann der Längsträger 4 eine Stirnwand (hier nicht dargestellt) aufweisen, die aus einem separaten mit dem Rahmen dichtend verbundenen Deckelelement bestehen kann. Dieses Deckelelement kann aber auch beispielsweise durch Schweißen mit dem Längsträger verbunden sein, so dass das Deckelement eine mit dem Längsträger integral ausgebildete Stirnwand bildet. Es ist aber auch jedes andere dichtend abschließende Deckelelement verwendbar, das den Rahmen derart abschließt, dass im Raum 10 ein Fluid komprimiert werden kann.

Des weiteren kann der Längsträger 4 oder die Stirnwand eine hier nicht dargestellte Füllvorrichtung aufweisen, über die das komprimierbare Fluid in den Raum 10 eingefüllt bzw. nachgefüllt werden kann.

Der Raum 12 dagegen umfasst ein nicht komprimierbares Fluid, insbesondere ein Hydrauliköl oder Ölgemisch, dessen Zu- und Abfluss über geeignete, hier nicht dargestellte Ventile gesteuert wird, und ist über eine hier nicht dargestellte Stirnwand dicht abgeschlossen, so dass der Kolben 8 beim Einleiten des nicht komprimierbaren Fluids mit Druck beaufschlagt werden kann. Die Stirnwand kann ebenfalls beispielsweise durch Anschweißen eines Deckelelements hergestellt sein. Es sind jedoch auch andere Lösungen denkbar, die es ermöglichen, den durch das Einleiten des nicht komprimierbaren Fluids erzeugten Druck auf den Kolben zu richten.

Zusätzlich kann der Längsträger 4 im Bereich des Raums 12 eine Füllvorrichtung (hier nicht dargestellt) aufweisen, die ein Befüllen bzw. Nachfüllen mit dem nicht komprimierbaren Fluid ermöglicht. Es kann jedoch auch ein Reservoir für das nicht komprimierbare Fluid bereitstehen, das wiederum eine Füllvorrichtung aufweist und zudem mit dem Ventilsystem zum Einleiten und Ablassen des nicht komprimierbaren Fluids in Verbindung steht.

Weiterhin können am Längsträger 4 hier nicht dargestellte Anschlüsse vorgesehen sein, die über ein Ventilsystem und eine hydraulische Antriebseinheit, beispielsweise eine hydraulische Pumpen/Motor-Einheit, mit einem Verbraucher in Verbindung stehen.

Der Kolben 8 ist so ausgeführt, dass seine Querschnittsform der Querschnittsform des Längsträgers 4 entspricht. Das bedeutet in dem hier dargestellten Beispiel, dass der Kolben 8 einen rechteckigen Querschnitt aufweist. Dabei sind die Abmessungen des Kolbens so gewählt, dass zwischen Rahmen und Kolben nur ein minimales Spiel verbleibt, so dass der Kolben zwar leichtläufig ist, aber auch ein dichtender Abschluss zwischen Kolben und Längsträger ermöglicht wird. Dazu kann der Kolben 8 weiterhin Dichtungselemente 14 aufweisen, die gewährleisten, dass ein Fluidübertritt zwischen den beiden Räumen 10 und 12 verhindert wird. Als Dichtungselemente 14 können beispielsweise Ring- oder O-Ringdichtungen verwendet werden, die in axial zueinander versetzten Nuten im Kolben 8 angeordnet sind. Als Dichtungsmaterial haben sich thermoplastische Elastomere besonders bewährt.

Der Kolben 8 ist vorzugsweise aus einem Kunststoffmaterial, insbesondere aus einem Thermoplast oder Duroplast gefertigt, das beispielsweise spritzgegossenen wird. Er kann jedoch auch mittels Zwei-Komponenten-Spritzgießtechnik hergestellt sein, wobei beispielsweise die erste Komponente für den Kolben aus verstärktem Kunststoff und die zweite Komponente für die Dichtung aus thermoplastischem Elastomer (TPE) gebildet ist. Ebenfalls ist es möglich statt eines aus Kunststoff gefertigten Kolbens einen herkömmlichen Stahlkolben zu verwenden, dies hat jedoch den Nachteil, dass dadurch wiederum das Gesamtgewicht vergrößert wird.

Insgesamt sind alle Arten von Speicherkolben verwendbar und die Erfindung soll nicht auf den hier dargestellten Kolben eingeschränkt sein.

Des Weiteren ist auch denkbar, statt des hier dargestellten Kolbenspeichers ein Membran- oder Blasenspeicher zu verwenden. Dabei kann die Form des als Speichergehäuse dienenden Strukturelements auch die Art des Hydrospeichers bestimmen.

Offenbart wird ein Hydrospeicher für ein Mobilhydrauliksystem, insbesondere ein Fahrzeug, mit einem innerhalb eines Speichergehäuses beweglich angeordneten Trennelement, das zwei Fluidräume innerhalb des Speichergehäuses voneinander trennt, wobei der eine Fluidraum ein komprimierbares Fluid, der andere Fluidraum ein nicht komprimierbares Fluid aufweist, wobei das Speichergehäuse integral mit einem Strukturbauteil des Mobilhydrauliksystems ausgebildet ist.

## Patentansprüche

1. Hydrospeicher (1) für ein Mobilhydrauliksystem, insbesondere ein Fahrzeug, mit einem innerhalb eines Speichergehäuses (2) verfahrbar angeordneten Trennelement (8), das zwei Fluidräume (10, 12) innerhalb des Speichergehäuses (2) voneinander trennt, wobei der eine Fluidraum (10) ein komprimierbares Fluid, der andere Fluidraum (12) ein nicht komprimierbares Fluid aufweist,
**dadurch gekennzeichnet, dass**
das Speichergehäuse (2) integral mit einem Strukturbauteil (4) des Mobilhydrauliksystems ausgebildet ist, oder in einem Strukturbauteil des Mobilhydrauliksystems untergebracht ist.

2. Hydrospeicher nach Patentanspruch 1, wobei das Mobilhydrauliksystem ein Hydraulikhybridfahrzeug ist.

3. Hydrospeicher nach Patentanspruch 1 oder 2, wobei das Strukturbauteil ein Fahrzeugrahmenelement ist.

4. Hydrospeicher nach Patentanspruch 3, wobei das Fahrzeugrahmenelement ein Längsträger des Fahrzeugrahmens ist.

5. Hydrospeicher nach einem der vorhergehenden Patentansprüche, wobei das Strukturbauteil mindestens eine Anschlussvorrichtung für einen im Mobilhydrauliksystem angeordneten Verbraucher aufweist.

6. Hydrospeicher nach einem der vorhergehenden Patentansprüche, wobei das komprimierbare Fluid ein Gas oder Gasgemisch und/oder das nicht komprimierbare Fluid ein Öl oder Ölgemisch ist.

7. Hydrospeicher nach einem der vorhergehenden Patentansprüche, wobei dieser als Kolbenspeicher ausgeführt ist.

8. Hydrospeicher nach Patentanspruch 7, wobei das als Kolben ausgeführte Trennelement aus Kunststoff, insbesondere einem Duroplast/Thermoplast, oder aus Stahl hergestellt ist.

9. Hydrospeicher nach Patentanspruch 7 oder 8, wobei der Kolben weiterhin Dichtungselemente (14) aufweist, die die beiden Räume derart abdichten, dass ein Fluidübertritt verhindert wird.

10. Hydrospeicher nach einem der Patentansprüche 1 bis 6, der als Blasenspeicher ausgeführt ist.

11. Hydrospeicher nach einem der Patentansprüche 1 bis 6, der als Membranspeicher ausgeführt ist.

12. Fahrzeug mit einem Hydrospeicher nach einem der Patentansprüche 1 bis 11.

13. Fahrzeug nach Patentanspruch 12, wobei das Fahrzeug ein Hydraulikhybridfahrzeug ist.
